# EUROPEAN PATENT APPLICATION

(11) **EP 1 273 731 A2**
(43) Date of publication of application: **08.01.2003**
(21) Application number: 02014786.4
(22) Date of filing: 04.07.2002
(51) Int. Cl.: E04C 2/34

(54) **A composite panel, having synthetic material surfaces, for making furniture pieces**

(30) Priority: 04.07.2001 IT MI20011418
(71) Applicant: Donati, Francesco, 24060 Cenate Sopra (Bergamo) (IT); Donati, Giuseppe, 24060 Cenate Sopra (Bergamo) (IT)
(72) Inventor: Donati Francesco, 24060 Cenate Sopra (Bergamo) (IT); Donati, Giuseppe, 24060 Cenate Sopra (Bergamo) (IT); Oberti, Pierrosario, 24069 Cenate Sotto (Bergamo) (IT)
(74) Representative: Cicogna, Franco

(57) **Abstract**

A composite panel having a synthetic material surface, specifically designed for making furniture pieces, comprises a first plate-like element and a second plate-like element coupled with a substantially parallel relationship, through an interposition of a corrugated coupling element, made of a metal material, at least the first plate-like element being made of a synthetic laminated material, a glass-resin material, a glass fabric material, a glass material, a plexiglas material and different plastics or synthetic resin materials.

## Description

### BACKGROUND OF THE INVENTION

The present invention relates to a composite panel, having a synthetic material surface, specifically designed for making furniture pieces.

As is known, the panels used for making furniture pieces, and constructional elements such as wings, bottoms, tables and the like, must have very good mechanical strength characteristics and a satisfactory aesthetic aspect.

For making the above mentioned panels, there are conventionally used synthetic materials such as laminated, plastics, glass-resin, plexiglas materials and so on.

However, as the panel has a comparatively large size, the weight of these prior materials is excessive and, anyhow, it is not possible to exceed a given size, since the mentioned prior materials do not provide the required mechanical strength.

### SUMMARY OF THE INVENTION

Accordingly, the aim of the present invention is to provide such a composite panel, specifically designed for furniture pieces, which has at least a synthetic material surface and very good mechanical strength characteristics.

Within the scope of the above mentioned aim, a main object of the present invention is to provide such a panel having a very small weight, while providing very good mechanical characteristics.

Another object of the present invention is to provide such a panel having very good aesthetic characteristics.

Yet another object of the present invention is to provide such a panel which can be processed and machined to a finished condition by substantially using machining and processing methods like those for machining prior panels made of the same materials, and by using the same machining apparatus.

According to one aspect of the present invention, the above mentioned aim and objects, as well as yet other objects, which will become more apparent hereinafter, are achieved by a composite panel, including a surface of a synthetic material, specifically designed for making furniture pieces, characterized in that said panel comprises a first plate element and a second plate element coupled to one another with a substantially parallel relationship, through an interposition of a corrugated coupling element made of a metal material, and that at least the first plate element is made of a synthetic laminated material, a glass-resin material, a glass fabric material, a glass material, a plexiglas material, and different plastics or synthetic resin materials.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example, in the accompanying drawings, where:
Figure 1 is a broken away perspective view of the panel according to the present invention;
Figure 2 is a further exploded perspective view of the panel according to the invention;
Figure 3 is a cross-sectional view of the panel according to the invention; and
Figure 4 is a further cross-sectional view of the panel according to a further aspect of the invention.

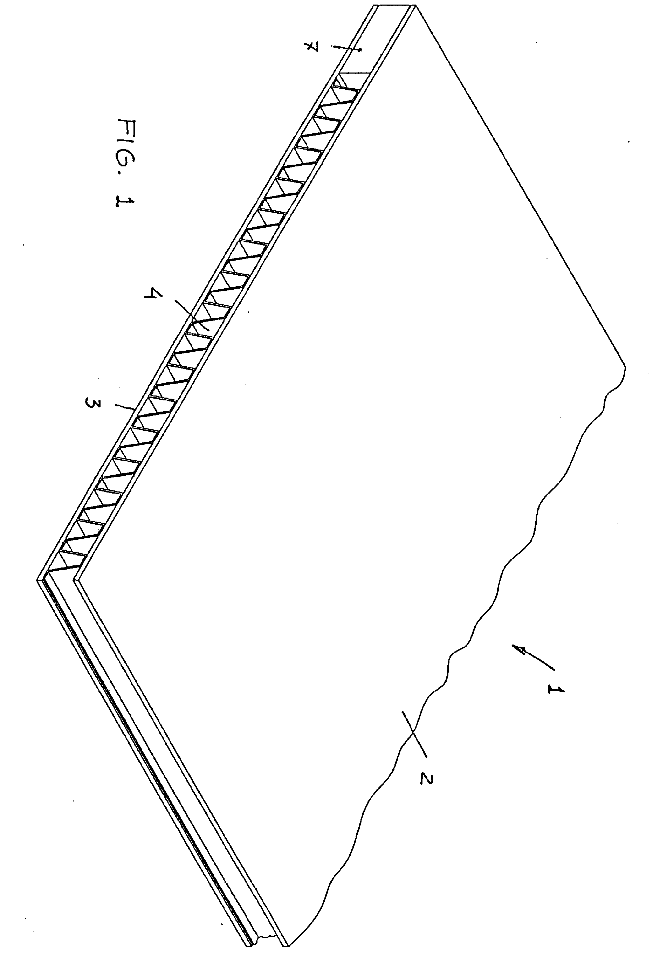

### DESCRIPTION OF THE PREFERRED EMBODIMENTS

With reference to the number references of the above mentioned figures, the composite panel according to the invention, which has been generally indicated by the reference number 1, comprises a first plate element 2 and a second plate element 3, coupled to one another in a substantially parallel relationship, through an interposition of a corrugated coupling element comprising, in this embodiment, a fretted element 4, made of a metal material, such as aluminium, AISI steel, galvanized sheet metal, titanium and alloys thereof.

The fretted element 4 advantageously comprises a profile including a plurality of horizontal portions 5, corresponding to peaks and valleys of the contour or profile, joined by a plurality of angled portions 6, so as to provide a series of following trapezium patterns.

The fretted element 4 is applied with its horizontal surfaces 5 to contact the plate-like elements 2 and 3 to connect said plate-like elements to one another for example by glueing.

This embodiment provides the advantage of providing a broad contact surface between the fretted element 4 and inner surfaces of the plate-like elements 2 and 3, thereby providing a particularly strong glued connection.

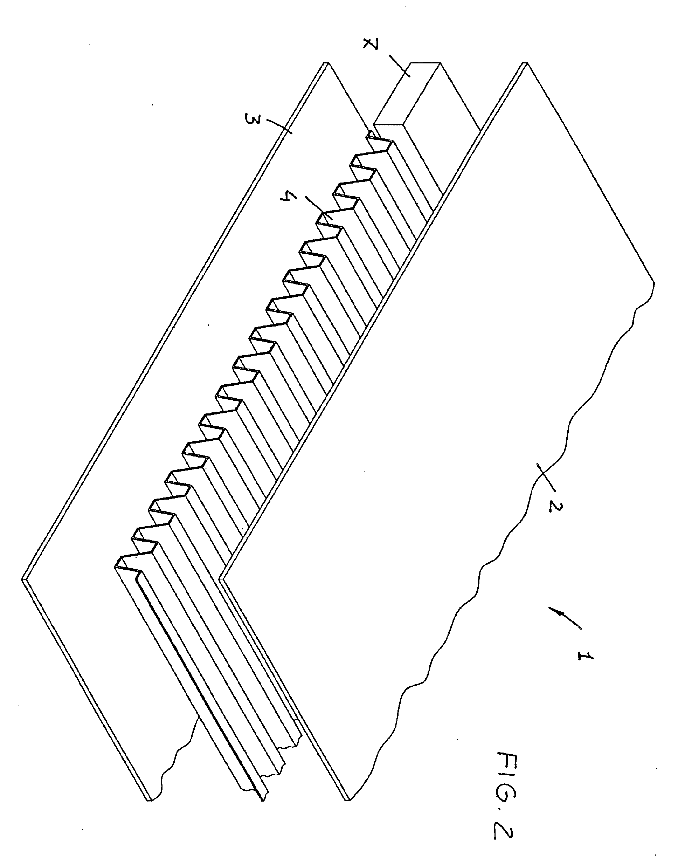

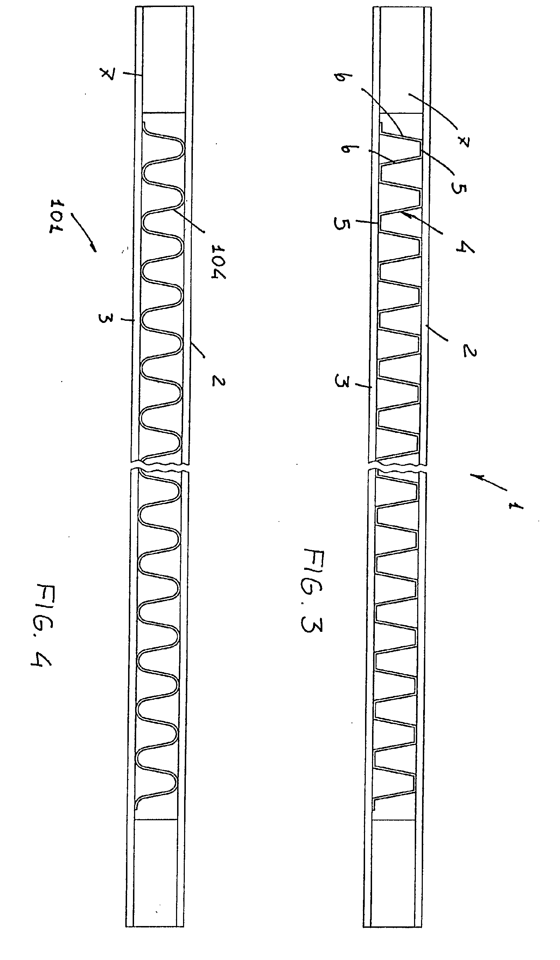

The fretted element, for coupling the plate-like elements 2 and 3, can also be made as an ondulated or waved sheet metal 104, to provide a panel 101, as shown in figure 4.

The panel 1, 101 can comprise a perimetrical frame 7, included between the plate-like elements 2 and 3, and preferably made of the same material as that of at least one of the plate-like elements 2 or 3, to allow the panel to be optionally machined by the same machining apparatus as those used for machining the plate-like elements.

The panel can also comprise perimetrical closures different from the frame 7 and comprising different types of edgings and profiles, depending on the panel application.

According to the present invention, the plate-like elements 2 and 3 can be made of a synthetic laminated material, a glass-resin material, a glass fabric material, a glass material, a plexiglas material and different plastics or synthetic resin materials.

The composite panel, optionally and advantageously provided of the perimetrical frame 7, can be accordingly machined by conventional tool machines, as those used for machining elements made of the above mentioned synthetic materials, and it can be processed to provide a book supporting panel, a cabinet wing, a kitchen furniture wing, and so on.

The comparatively high mechanical strength of the composite panel according to the present invention, also allows said panel to be usefully used for making furniture constructional elements or pieces, such as bottoms, holding panels, supporting panels, and also for making tables.

The composite panel according to the invention can also be made as a plate-like element made of a material different from the above mentioned materials.

For example, the second plate-like element 3 can be made of a less value material, or a stronger material, or a material having different characteristics, depending on the panel application.

The second plate-like element 3 can be made, for example, of a wood material in the form of plywood, Faesite™, MDF, hardboard or natural wood, and optional it can be coated by a veneer material and the like.

According to another embodiment of the invention, the second plate-like element 3 can be made of ceramics materials, stone and marble materials and the like.

If the composite panel according to the invention must be used for making cabinet wings, then the second plate-like element 3 can comprise, for example, a mirror, and the panel can be so assembled as to arrange the mirror inside the cabinet to be used as the cabinet wing is opened.

Thus, it is possible to make mirrored wings having a weight substantially lighter than that of prior mirrored wings, i.e. wings including a mirror applied to the wood panel.

The second plate-like element can also be made of a metal plate.

It has been found that the invention fully achieves the intended aim and objects, since it provides a composite panel having very good mechanical and aesthetic characteristics.

In practicing the invention, the used materials, and their size and shapes, can be any, depending on the requirements and the status of the art.

## Claims

1. A composite panel, including a surface of a synthetic material, specifically designed for making furniture pieces, **characterized in that** said panel comprises a first plate element and a second plate element coupled to one another with a substantially parallel relationship, through an interposition of a corrugated coupling element made of a metal material, and that at least the first plate element is made of a synthetic laminated material, a glass-resin material, a glass fabric material, a glass material, a plexiglas material, and different plastics or synthetic resin materials.

2. A panel, according to Claim 1, **characterized in that** also said second plate element is made of synthetic laminated material, a glass-resin material, a glass fabric material, a glass material, a plexiglas material and different plastics or synthetic resin materials.

3. A panel, according to Claim 1 or 2, **characterized in that** said corrugated coupling element is a fretted element made of a metal material such as aluminium, AISI steel, galvanized sheet metal, titanium and alloys thereof.

4. A panel, according to one or more of the preceding claims, **characterized in that** said fretted element comprises a profile including a plurality of horizontal portions, corresponding to peaks and valleys of said profile, joined by a plurality of angled portions, so as to form a series of following trapezium patterns, said fretted element being applied with the horizontal surfaces thereof in contact with said plate elements, to connect said plate elements to one another for example by glueing.

5. A panel, according to one or more of the preceding claims, **characterized in that** said corrugated element, for coupling said plate elements is a ondulated or waved sheet metal element.

6. A panel, according to one or more of the preceding claims, **characterized in that** said panel comprises a perimetrical frame, included between said plate elements and made of the same material as at least one of said plate elements.

7. A panel, according to one or more of the preceding claims, **characterized in that** said second plate element is made of a material different from that of the first element.

8. A panel, according to one or more of the preceding claims, **characterized in that** said second plate element is made of wood materials such as plywood, Faesite™, MDF, hardboard, natural wood and the like.

9. A panel, according to one or more of the preceding claims, **characterized in that** said second plate element is made of ceramics materials, stone and marble materials and the like.

10. A panel, according to one or more of the preceding claims, **characterized in that** said second plate element comprises a mirror.

11. A panel, according to one or more of the preceding claims, **characterized in that** said panel comprises one or more of the disclosed and/or illustrated features.
